## Europäisches Patentamt
## European Patent Office
## Office européen des brevets

(11) Veröffentlichungsnummer : **0 171 659 B2**

(12) ## NEUE EUROPÄISCHE PATENTSCHRIFT

(45) Veröffentlichungstag der neuen Patentschrift :
20.07.94 Patentblatt 94/29

(51) Int. Cl.⁵ : **C09D 9/00**

(21) Anmeldenummer : **85109162.9**

(22) Anmeldetag : **22.07.85**

(54) Tapetenentferner.

(30) Priorität : **25.07.84 DE 3427484**

(43) Veröffentlichungstag der Anmeldung :
**19.02.86 Patentblatt 86/08**

(45) Bekanntmachung des Hinweises auf die
Patenterteilung :
**28.09.88 Patentblatt 88/39**

(45) Bekanntmachung des Hinweises auf die
Entscheidung über den Einspruch :
**20.07.94 Patentblatt 94/29**

(84) Benannte Vertragsstaaten :
**AT BE CH DE FR LI LU NL**

(56) Entgegenhaltungen :
**DE-B- 1 468 048**
**DE-B-12 738 10**
**DE-C-95 945 5**
**FR-A- 1 142 475**
**US-A- 4 067 773**
**US-A- 4 247 884**
**Handbuch der Tapezier- und Klebetechnik,**
**Stuttgart 1968**

(56) Entgegenhaltungen :
**Firmenschrift "Griffe + Kniffe für gutes Tape-**
**zieren",Marburg, Erscheinungsjahr vor Juli**
**1977**
**The Chemical Formulary, Bennett XIII (1967)**
**The Chemical Formulary, Bennett XIV (1968)**
**Römpp Chemielexikon, 7. Auflage (1972-77)**
**Technisches Merkblatt Methylan Tapeten-**
**Kleister Henkel, ZR-Anorg. Produkte/Klebstof-**
**fe**
**Technisches Merkblatt pril-pulver, Böhme**
**(21.2.84)**
**Seifen-Öle-Fette-Wachse 81, S. 639, Augsburg**
**1955**
**Ullmanns Encyklopädie der techn. Chemie,**
**Band 2, 4. Auflage (1972)**

(73) Patentinhaber : **Lang, Eugen**
**Am Hang 18**
**D-85567 Grafing (DE)**

(72) Erfinder : **Lang, Eugen**
**Am Hang 18**
**D-85567 Grafing (DE)**

(74) Vertreter : **Resch, Michael**
**Reichenbachstrasse 19**
**D-80469 München (DE)**

EP 0 171 659 B2

EP 0 171 659 B2

**Beschreibung**

Die Erfindung betrifft einen neuartigen Tapetenentferner, der bei Gebrauch mit Wasser vermengt wird.

Beim Wiedertapezieren von Räumen bereitet es oft erhebliche Schwierigkeiten, die alten Tapeten zu entfernen. Bei einfachen, nicht abwaschbaren Tapeten genügt zwar oft bereits ein Einnässen der Tapete mit Wasser. Bei abwaschbaren Tapeten jedoch ist eine solche Vorgehensweise nicht möglich, da das beispielsweise mittels einer Bürste aufgetragene Wasser perlt und sofort von der Tapete abläuft. Am Markt vorhandene flüssige Zusätze zum Wasser machen das Wasser häufig noch dünnflüssiger und zeigen die gewünschte Wirkung nur, wenn die Tapetenoberfläche mittels Drahtbürste oder grobem Glaspapier so aufgerauht wird, daß das Wasser in die unteren Schichten der Tapete eindringen kann. Dieses Aufrauhen der Tapetenoberfläche ist jedoch besonders arbeitsaufwendig.

Aus der FR-A-1 142 475 ist ein Reinigungsmittel bekannt, welches ein Eindickungsmittel (Zelluloseether) beinhaltet.

Aus der US-PS 4 274 884 ist ein Tapetenentferner bekannt, welcher ein Eindickungsmittel relativ geringer Konzentration umfaßt, wobei dieser Tapetenentferner als gebrauchsfertiges Produkt mit in geeigneten Lösungsmitteln gelösten Komponenten in den Handel kommt.

Der Erfindung liegt die Aufgabe zugrunde, einen Tapetenentferner, der erst bei Gebrauch mit Wasser vermengt wird, zu schaffen, welcher ein sauberes Entfernen der Tapeten ohne großen Arbeitsaufwand, wie insbesondere Aufrauhen der Tapeten, ermöglicht.

Erfindungsgemäß ist daher vorgesehen, daß der Tapetenentferner als Hauptbestandteil ein wasserlösliches Eindickungsmittel in Granulatform, insbesondere einen Zelluloseether, enthält, daß er zusätzlich anlösende Mittel wie insbesondere Tenside und/oder Perborat und/oder Salmiak enthält, und daß die zusätzlichen Mittel ebenfalls granulatförmig sind, wobei die Bestandteile als Mischung vorliegen.

Das Eindickungsmittel bewirkt, daß, wenn der Tapetenentferner mit Wasser verrührt ist, eine dickflüssige, gallertartige Masse entsteht, die beispielsweise mittels Lammfellroller oder Deckenbürste auf die abzulösende Tapete aufgetragen wird. Diese Masse bleibt dann über Stunden an der Tapete haften, so daß das Wasser sowie vorhandene zusätzliche Wirkstoffe erforderlichenfalls über Stunden auf die abzulösende Tapete einwirken können und somit im Gegensatz zu den gängigen, dünnflüssigen Tapetenentfernern ausreichend Zeit haben, um die Tapete von der Wand zu lösen. Die mit dem erfindungsgemäßen Tapetenentferner bestrichene Tapete kann nach relativ kurzer Zeit von der Wand abgezogen werden, ohne daß zusätzliche Werkzeuge, wie Spachtel od. dgl. benötigt würden, wodurch die Wände sehr geschont werden.

Zur Beschleunigung des Ablösevorgangs enthält der erfindungsgemäße Tapetenentferner zusätzlich an sich bekannte anlösende Mittel, wie insbesondere Tenside und/oder Perborat und/oder Salmiak, wobei die zusätzlichen anlösenden Mittel dem Tapetenentferner ebenfalls in Granulatform beigegeben sind.

Zur Beschleunigung des Lösens des Eindickmittels bzw. der zusätzlichen anlösenden Mittel im Wasser sind dem Tapetenentferner in bevorzugter Weiterbildung der Erfindung zusätzlich Aktivatoren, wie insbesondere Enzyme und/oder Soda beigemengt, wobei diese Aktivatoren ebenfalls granulatförmig sind.

Um eine gleichmäßige Verteilung der verschiedenen Bestandteile des Tapetenentferners in der für den Verbraucher bestimmten Verpackungseinheit zu gewährleisten, ist die Korngröße des Eindickungsmittels und die jeweilige Korngröße sämtlicher zusätzlicher Mittel vorzugsweise im wesentlichen gleich.

Der erfindungsgemäße Tapetenentferner besteht somit hauptsächlich aus einem granulatförmigen Eindickungsmittel, insbesondere wasserlöslichem Zelluloseether, der zur Anwendung in Wasser eingerührt wird, wobei nach dem Quellen des Eindickungsmittels die entstandene Masse auf die Tapete aufgetragen wird.

Die beigemengten anlösenden Mittel, wie anionische Tenside, Perborat und Soda dienen zum besseren und schnelleren Lösen von Fetten, Eiweiß, Kleister, chemischen Fetten, Kunstharz usw., wobei vorzugsweise eine solche Auswahl an anlösenden Mitteln gewählt ist, die ein möglichst breites Anwendungsspektrum des erfindungsgemäßen Tapetenentferners ermöglichen.

Die vorzugsweise ebenfalls beigefügten zusätzlichen Aktivatoren, wie Enzyme und/oder Soda, dienen in erster Linie dazu, zu gewährleisten, daß mit Wasser angesetzte Tapetenentferner in möglichst kurzer Zeit gebrauchsfertig ist, d. h. sie dienen zur Beschleunigung der Lösung des Eindickungsmittels und der anlösenden Mittel im Wasser.

Im folgenden werden zwei spezielle Ausführungsbeispiele der Erfindung angegeben :

Beispiel 1 :

Es wurden folgende Stoffe in Granulatform miteinander vermengt (insamt 200 g) :

2

| | |
|---|---|
| Tylose (Natriumcarboxy-methylcellulose NaCMC) | 78 % |
| anionische Tenside | 12 % |
| Perborat | 10 % |

Die Prozentangaben beziehen sich jeweils auf Gewichts-Prozent. Jeder der vorgenannten Stoffe lag in Granulatform von etwa 0,3 mm Durchmesser vor. Diese Mischung wurde in 4 l kaltes Wasser eingerührt und war nach ca. 12 Stunden gebrauchsfertig. Das Ergebnis war eine gallertartige, dickflüssige Masse in etwa von der Konsistenz eines Tapetenkleisters, die auf die Tapete aufgetragen wurde und hieran haftete, ohne abzulaufen. Nach ca. 20 Minuten konnten die Tapeten ohne weiteres abgezogen werden, und zwar sowohl waschfeste Tapeten als auch gestrichene Rauhfaser- oder Strukturtapeten.

Beispiel 2 :

Es wurden folgende Bestandteile in Granulatform miteinander vermischt :

| | |
|---|---|
| Tylose (Natriumcarboxy-methylcellulose NaCMC) | 66 % |
| anionische Tenside | 10 % |
| Perborat | 8 % |
| Enzyme | 8 % |
| gestoßener Soda | 8 % |

Die Prozentangaben stellen Gewichtsprozent dar. Die Korngröße betrug wiederum ca. 0,3 mm Durchmesser. 200 g der so vorbereiteten Mischung wurden in 4 l lauwarmes Wasser mit einer Temperatur von 30°C eingerührt. Nach ca. 1 Stunde war der Tapetenablöser gebrauchsfertig und wies im wesentlichen die gleiche Konsistenz und die gleichen Eigenschaften auf wie im Falle des Beispiels 1.

**Patentansprüche**

1. Tapetenentferner, der bei Gebrauch mit Wasser vermengt wird, dadurch gekennzeichnet, daß er als Hauptbestandteil ein wasserlösliches Eindickungsmittel in Granulatform enthält, daß er zusätzlich anlösende Mittel wie insbesondere Tenside und/oder Perborat und/oder Salmiak enthält und daß die zusätzlichen Mittel ebenfalls granulatförmig sind, wobei die Bestandteile als Mischung vorliegen.

2. Tapetenentferner nach Anspruch 1, dadurch gekennzeichnet, daß das Eindickungsmittel ein Zulluloseether ist.

3. Tapetenentferner nach Anspruch 2, dadurch gekennzeichnet, daß das Eindickungsmittel Natriumcarboxymethylcellulose (NaCMC) ist.

4. Tapetenentferner nach Anspruch 1, dadurch gekennzeichnet, daß er zusätzlich Aktivatoren zum Beschleunigen des Lösens von Eindickungsmittel und/oder der anlösenden Mittel im Wasser enthält.

5. Tapetenentferner nach Anspruch 4, dadurch gekennzeichnet, daß die Aktivatoren Enzyme und/oder Soda sind.

6. Tapetenentferner nach einem der vorhergehenden Ansprüche, dadurch gekennzeichnet, daß die Korngröße des Eindickungsmittels und die jeweilige Korngröße sämtlicher zusätzlicher Mittel im wesentlichen gleich ist.

**Claims**

1. Wall paper remover being mixed with water when used, characterized in that it contains a water-soluble thickener in granule form as a main component, in that it additionally contains solvent agents such as, in particular, tensio-actives and/or perborates and/or ammonia, and that said additional agents are also granule-shaped, said components existing as a mixture.

2. Wall paper remover according to claim 1, characterized in that the thickener is a cellulose ether.

3. Wall paper remover according to claim 2, characterized in that the thickener is sodiumcarboxymethylcellulose (NaCMC).

4. Wall paper remover according to claim 1, characterized in that it also contains activators for accelerating the dissolving of the thickener and/or the solvent agents in the water.

5. Wall paper remover according to claim 4, characterized in that the activators are enzymes and/or sodium.

6. Wall paper remover according to one of the preceding claims, characterized in that the grain size of the thickener and the corresponding grain size of all additional agents is substantially the same.


## Revendications

1. Produit pour le décollage de revêtements muraux qui pour l'usage est mélangé à de l'eau, caractérisé en ce que le principal composant est un épaississant soluble dans l'eau en forme de granulé, qu'il comporte en plus des produits dissoudrants comme spécialement des tensio-activs et/ou du perborate et/ou de l'ammoniac, et que les produits supplémentaires sont également en forme de granulés, les composants existant comme mixture.

2. Produit pour le décollage de revêtements muraux selon la revendication 1, caractérisé en ce que l'épaississant est un éther de cellulose.

3. Produit pour le décollage de revêtements muraux selon la revendication 2, caractérisé en ce que l'épaississant est de la cellulose de carboxyméthyle de sodium (NaCMC).

4. Produit pour le décollage de revêtements muraux selon la revendication 1, caractérisé en ce qu'il contient des activants pour accélérer la dissolution d'épaississants et/ou de produits dissoudrants dans l'eau.

5. Produit pour le décollage de revêtements muraux selon la revendication 4, caractérisé en ce que les activants sont des enzymes et/ou de la soude.

6. Produit pour le décollage de revêtements muraux selon l'une des revendications précédentes, caractérisé en ce que la taille des granulés de l'épaississant et la taille des granulés de tous les produits supplémentaires est substantiellement identique.